# EUROPEAN PATENT APPLICATION

(11) **EP 4 621 139 A1**
(43) Date of publication of application: **24.09.2025**
(21) Application number: 25162818.6
(22) Date of filing: 11.03.2025
(51) Int. Cl.: E02F 9/08, E02F 9/24

(54) **WORK MACHINE**

(30) Priority: 18.03.2024 JP 2024042658
(71) Applicant: Yanmar Holdings Co., Ltd., Osaka-shi, Osaka (JP)
(72) Inventor: MURAOKA, Hiroyuki, Chikugo-shi (JP)
(74) Representative: Sekiguchi, Kazuya

(57) **Abstract**

[Problem] To enable a work machine to communicate with the outside by installing an antenna as a communication device, even when the work machine is a small work machine with a limited space around a driving unit.

[Solution] A work machine includes: a work implement supported in front of a driving unit; a protective member that is erected between the driving unit and the work implement, and protects the driving unit; and an antenna mounted on the protective member.

## Description

### TECHNICAL FIELD

The present invention relates to a work machine.

### BACKGROUND ART

For example, Patent Document 1 discloses a turning work implement having a communication device disposed thereon. The communication device has a built-in communication antenna. The communication device is disposed behind a console located to the side of a driver's seat.

### PRIOR ART DOCUMENT

### PATENT DOCUMENT

Patent Document 1: Japanese Patent Application Laid-open No. 2023-148596

### SUMMARY OF INVENTION

### TECHNICAL PROBLEM

In a small work machine referred to as an ultra-mini excavator, it is difficult to secure a space for disposing a communication device, around a driving unit, including a driver's seat (for example, behind the driver's seat). In this respect, a configuration of Patent Document 1 leaves room for improvement.

The present invention has been made to solve the above problem, and an object of the present invention is to provide a work machine that can communicate with the outside by installing an antenna as a communication device, even when the work machine has a small configuration with a limited space around a driving unit.

### SOLUTION TO PROBLEM

A work machine according to an aspect of the present invention is a work machine provided with a work implement supported in front of a driving unit, and includes a protective member that is erected between the driving unit and the work implement, and protects the driving unit; and an antenna mounted on the protective member.

### ADVANTAGEOUS EFFECTS OF INVENTION

Even a small work machine with a limited space around a driving unit can communicate with the outside by installing an antenna.

### BRIEF DESCRIPTION OF DRAWINGS

FIG. 1 is a side view illustrating a schematic configuration of a hydraulic excavator, which is an example of a work machine according to one embodiment of the present invention.
FIG. 2 is a perspective view of the hydraulic excavator as seen obliquely from the front.
FIG. 3 is a block diagram schematically illustrating a configuration of an electrical system and a hydraulic system of the hydraulic excavator.
FIG. 4 is an enlarged perspective view of a ROPS frame provided in the hydraulic excavator.
FIG. 5 is a perspective view illustrating upper frames tilted forward with respect to lower frames.
FIG. 6 is a perspective view illustrating a mounting location of an antenna on the ROPS frame.
FIG. 7 is an enlarged perspective view of a part A in FIG. 6.
FIG. 8 is a plan view of the hydraulic excavator.
FIG. 9 is an explanatory diagram illustrating a schematic positional relation between the ROPS frame and the antenna in plan view.
FIG. 10 is a side view illustrating another mounting position of the antenna in the hydraulic excavator.
FIG. 11 is a side view illustrating still another mounting position of the antenna in the hydraulic excavator.
FIG. 12 is a side view illustrating a position of the antenna when the upper frames are folded forward with respect to the lower frames.
FIG. 13 is an enlarged perspective view illustrating the mounting position of the antenna in FIG. 12.
FIG. 14 is a plan view of the hydraulic excavator.
FIG. 15 is a perspective view illustrating another configuration of the hydraulic excavator.

### DESCRIPTION OF EMBODIMENTS

An embodiment of the present invention will be described below with reference to the drawings.

### [1. Work Machine]

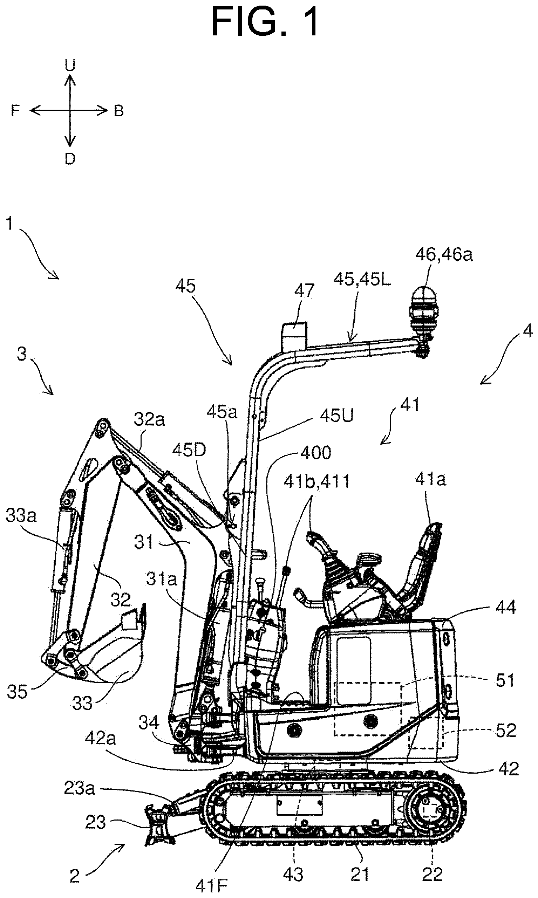

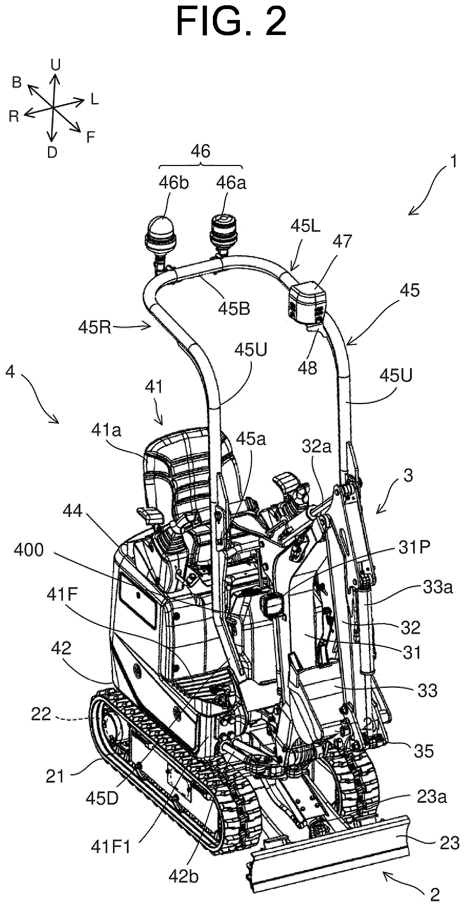

FIG. 1 is a side view illustrating a schematic configuration of a hydraulic excavator (electric excavator) 1, which is an example of an electric work machine according to this embodiment. FIG. 2 is a perspective view of the hydraulic excavator as seen obliquely from the front. The hydraulic excavator 1 includes a lower traveling body 2, a work implement 3, and an upper turning body 4. In the following, the hydraulic excavator 1 may be referred to as a "machine body".

Herein, the direction is defined as follows: The direction in which an operator (a manipulator, a driver) seated on a driver's seat 41a of the upper turning body 4 faces front is defined as the forward direction, and the direction opposite to the forward direction is defined as the backward direction. Therefore, in a state in which the upper turning body 4 does not turn with respect to the lower traveling body 2 (turning angle: 0°), the front-back direction of the upper turning body 4 coincides with the direction in which the lower traveling body 2 moves forward and backward. As viewed from the operator seated on the driver's seat 41a, the left side is defined as the "left" and the right side is defined as the "right". Furthermore, the gravity direction perpendicular to the front-back direction and the left-right direction is defined as the up-down direction, in which the upstream side of the gravity direction is defined as the "up", and the downstream side thereof is defined as the "down". In the drawings, the hydraulic excavator 1 is illustrated in a state in which the upper turning body 4 does not turn with respect to the lower traveling body 2. Further, in the drawings, the forward direction is denoted by "F", the backward direction is denoted by "B", the leftward direction is denoted by "L", the rightward direction is denoted by "R", the upward direction is denoted by "U", and the downward direction is denoted by "D".

The lower traveling body 2 includes a pair of left and right crawlers 21 and a pair of left and right traveling motors 22. Each of the traveling motors 22 is a hydraulic motor. The left and right traveling motors 22 drive the left and right crawlers 21, respectively, so that the hydraulic excavator 1 can be moved forward and backward. The lower traveling body 2 further includes a blade 23 for performing ground leveling work and a blade cylinder 23a for rotating the blade 23 in the up-down direction.

The work implement 3 includes a boom 31, an arm 32, and a bucket 33. The boom 31, the arm 32, and the bucket 33 are independently driven, so that it is possible to perform excavation work of earth, sand or the like. In addition, instead of the bucket 33, an attachment can be mounted as appropriate. As the attachment, for example, in a case where a breaker is mounted, crushing work or demolition work can be performed using the breaker.

The boom 31, the arm 32, and the bucket 33 are driven by a boom cylinder 31a, the arm cylinder 32a, and the bucket cylinder 33a, respectively. The boom cylinder 31a, the arm cylinder 32a, and the bucket cylinder 33a are composed of hydraulic cylinders.

A base end of the boom 31, that is, an end of the boom 31 opposite to an end coupled to the arm 32, is swingably coupled to a leading end 42a of a turning frame 42 via a boom bracket 34. In other words, the hydraulic excavator 1 in this embodiment has a boom swing function in which the boom 31 swings left and right from the leading end 42a. The turning frame 42 is provided with a swing cylinder 42b (see FIG. 2). The swing cylinder 42b is a hydraulic cylinder that swings the boom 31 by extending and retracting.

The boom 31 has a shape bent forward at an obtuse angle, and is rotated in the up-down direction by extension and retraction of the boom cylinder 31a. The boom cylinder 31a is located on the rear side (back side) with respect to the boom 31. The boom cylinder 31a has a base end supported by the boom bracket 34, and a leading end coupled to a bending part of the boom 31, and moves in an extendable and retractable manner. The arm 32 is rotatably coupled to the leading end of the boom 31. The arm 32 is rotated in the up-down direction by extension and retraction of the arm cylinder 32a. The arm cylinder 32a has a base end supported by the boom 31, and a leading end coupled to a base end of the arm 32, and moves in an extendable and retractable manner. The bucket 33 is connected to a leading end of the arm 32 via a link mechanism 35, and is rotated in the up-down direction by extension and retraction of the bucket cylinder 33a. The bucket cylinder 33a has a base end supported by the arm 32 and a leading end connected to the link mechanism 35 to extend and retract.

Thus, the work implement 3 is supported by the leading end 42a of the turning frame 42 of the upper turning body 4. As a result, the work implement 3 is located in front of a driving unit 41 of the upper turning body 4, which will be described later. That is, the hydraulic excavator 1 includes the work implement 3 supported in front of the driving unit 41.

A working lamp 31P (see FIG. 2) is mounted on the right side of the boom 31. When an operator performs work using the hydraulic excavator 1, he/she can turn on the working lamp 31P to brightly illuminate an area ahead by operating a working lamp switch (not illustrated) as necessary.

The upper turning body 4 is located above the lower traveling body 2 and is provided so as to be able to turn with respect to the lower traveling body 2. In the upper turning body 4, the driving unit 41, the turning frame 42, a turning motor 43, and a machine room 44 are disposed. The upper turning body 4 turns via a turning bearing (not illustrated) driven by the turning motor 43 which is a hydraulic motor.

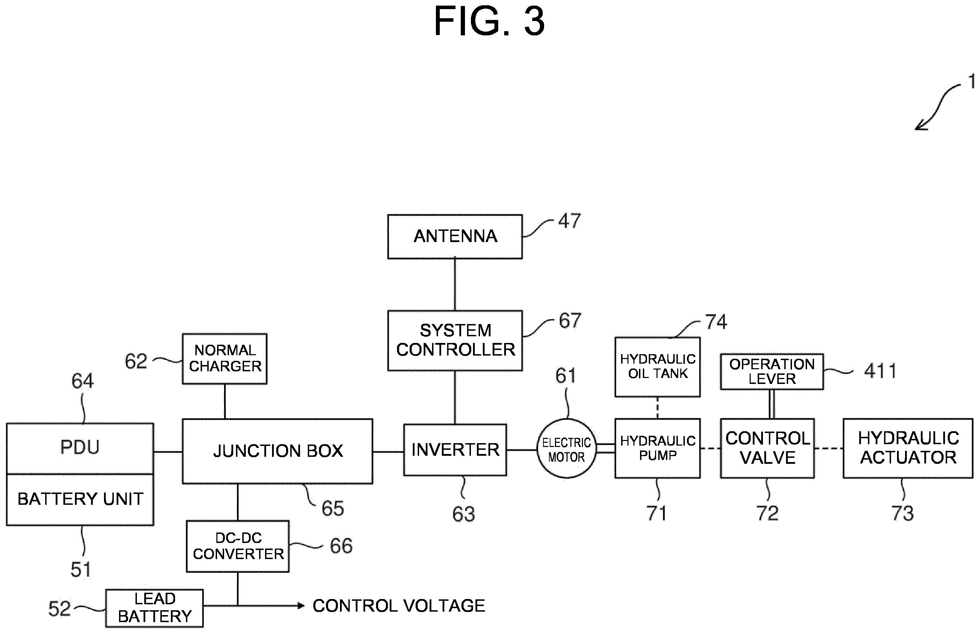

In the driving unit 41, the driver's seat 41a is disposed. An operation unit 41b is disposed around the driver's seat 41a. The operation unit 41b includes a lever, a button, a pedal, and the like. The operator sits in the driver's seat 41a and operates the operation unit 41b, so that a hydraulic actuator 73 (see FIG. 3), which will be described later, is driven. Consequently, it is possible to perform traveling of the lower traveling body 2, excavation work by the work implement 3, turning of the upper turning body 4, and the like.

In particular, the operation unit 41b includes an operation lever 411. The operation lever 411 includes various levers such as a travel lever and a cutoff lever. The travel lever is provided so as to protrude upward from an upper surface of an operation box 400 disposed in front of the driver's seat 41a. The operation box 400 is erected on a front part of a floor 41F of the driving unit 41. The operator can cause the hydraulic excavator 1 to travel by operating the travel lever. The cut-off lever is located on the side of the driver's seat 41a. The operator can switch the drive of the hydraulic actuator 73 (see FIG. 3) on or off by operating the cut-off lever. Thus, the driving unit 41 includes the operation lever 411 that operates the hydraulic excavator 1.

Below the driver's seat 41a, the machine room 44 is disposed. The battery unit 51 is disposed in the machine room 44. The battery unit 51 is composed of, for example, a lithium ion battery unit. The battery unit 51 stores electric power and supplies the stored electric power to an electric motor 61 (see FIG. 3) to drive the electric motor 61.

A lead battery 52 is also disposed in the machine room 44. The lead battery 52 outputs a low voltage (e.g., 12V) DC voltage. The output from the lead battery 52 is supplied as a control voltage to, for example, a system controller 67 (see FIG. 3), and the like.

The upper turning body 4 further includes a ROPS frame 45. The ROPS frame 45 is a protective member provided for the purpose of protecting the driving unit 41 and the operator seated on the driver's seat 41a in the event that the hydraulic excavator 1 falls over. The ROPS frame 45 is fixed to a front wall part 41F1 of the upper turning body 4 and extends upward. The above front wall part 41F1 is a wall extending downward from a front end of the floor 41F. The above leading end 42a is provided so as to protrude forward from a center position in the left-right direction of the front wall part 41F1. Therefore, the ROPS frame 45 fixed to the front wall part 41F1 extends upward from a part between the driving unit 41 and the work implement 3. That is, the hydraulic excavator 1 includes a ROPS frame 45 as a protective member that is erected between the driving unit 41 and the work implement 3 and protects the driving unit 41. Details of the ROPS frame 45 will be described later.

An indicating lamp 46 is mounted on the ROPS frame 45. The indicating lamp 46 is, for example, a rotating lamp, but may also be an LED lamp. The indicating lamp 46 includes a first indicating lamp 46a and a second indicating lamp 46b. The first indicating lamp 46a and the second indicating lamp 46b are arranged side by side in the left-right direction on a back frame 45B of the ROPS frame 45, which will be described later.

When the operator sits on the driver's seat 41a and puts on a seat belt, the first indicating lamp 46a lights up in green. Consequently, a worker who works around the hydraulic excavator 1 can see the first indicating lamp 46a and recognize that the operator has put on the seat belt.

When the operator starts work with the hydraulic excavator 1, he/she can turn on the second indicating lamp 46b by operating a beacon switch (not illustrated) provided in the operation box 400. In addition, when the work is completed, the operator can turn off the second indicating lamp 46b by operating the beacon switch. Consequently, the worker around the hydraulic excavator 1 can recognize whether or not work is being performed with the hydraulic excavator 1 by seeing a lighting status of the second indicating lamp 46b.

### [2. Configuration of Electrical System and Hydraulic System]

FIG. 3 is a block diagram schematically illustrating a configuration of an electrical system and a hydraulic system of the hydraulic excavator. In addition, in the figure, for convenience, a path through which a current or an electrical signal flows is illustrated by solid lines, and a path through which hydraulic oil flows is illustrated by broken lines.

The hydraulic excavator 1 includes the electric motor 61, a normal charger 62, an inverter 63, a Power Distribution Unit (PDU) 64, a junction box 65, a DC-DC converter 66, and the system controller 67 in the machine room 44. The system controller 67 is composed of an electronic control unit also referred to as an Electronic Control Unit (ECU), and electrically controls each part of the hydraulic excavator 1.

The electric motor 61 is driven by electric power supplied from the battery unit 51 via the junction box 65 and the inverter 63. The electric motor 61 is composed of a permanent magnet motor or an induction motor.

A normal charger 62 (also referred to as a power supplier) converts an AC voltage supplied from an external power source via a cable (not illustrated) into a DC voltage. The voltage (DC voltage) output from the normal charger 62 is supplied to the battery unit 51 via the junction box 65 and a PDU 64. Consequently, the battery unit 51 is charged. The charging of the battery unit 51 at this time is referred to as normal charging. The hydraulic excavator 1 may include a quick-charging connector to which a quick-charging cable is connected. In this case, the battery unit 51 can be rapidly charged.

The inverter 63 converts the DC voltage supplied from the battery unit 51 into the AC voltage and supplies the AC voltage to the electric motor 61. Consequently, the electric motor 61 is rotated. The supply of the AC voltage (current) from the inverter 63 to the electric motor 61 is performed on the basis of a rotation command output from the system controller 67.

The PDU 64 is a battery control unit that controls input and output of the battery unit 51 by controlling internal battery relay. The junction box 65 is composed of a charger relay, an inverter relay, a fuse, and the like. The voltage output from the battery unit 51 is supplied to the inverter 63 via the PDU 64 and the junction box 65.

The DC-DC converter 66 reduces a high voltage (e.g., 300 V) DC voltage supplied from the battery unit 51 via the PDU 64 and the junction box 65 to a low voltage (e.g., 12 V). The voltage output from the DC-DC converter 66 is supplied to the system controller 67, or the like, in the same manner as the output from the lead battery 52.

A plurality of the hydraulic pumps 71 are connected to a rotation shaft (output shaft) of the electric motor 61. The plurality of hydraulic pumps 71 include a variable displacement pump and a fixed displacement pump. FIG. 3 illustrates only the single hydraulic pump 71 as an example. Each hydraulic pump 71 is connected to a hydraulic oil tank 74.

When the hydraulic pumps 71 are driven by the electric motor 61, hydraulic oil in the hydraulic oil tank 74 is supplied to the hydraulic actuator 73 via a control valve 72. Consequently, the hydraulic actuator 73 is driven. The control valve 72 is a direction switching valve that controls the flow direction and the flow rate of the hydraulic oil to be supplied to the hydraulic actuator 73. The hydraulic actuator 73 includes hydraulic motors (e.g., the left and right traveling motors 22 and the turning motor 43 illustrated in FIG. 1 and FIG. 2), and hydraulic cylinders (e.g., the boom cylinder 31a, the arm cylinder 32a, and the bucket cylinder 33a in FIG. 1).

The control valve 72 has a spool for adjusting the amount of hydraulic oil discharged to the hydraulic actuator 73. The spool is connected to the operation lever 411 (e.g., the travel lever) disposed in the driving unit 41 via a link mechanism. Consequently, the operation unit 41b is operated, so that the amount of hydraulic oil discharged from the control valve 72 can be mechanically controlled. As for a control method of the control valve 72, other method such as a pilot type and an electromagnetic type may be adopted.

The control valve 72 is disposed inside the operation box 400 illustrated in FIG. 1 and FIG. 2.

### [3. ROPS Frame]

Now, details of the above ROPS frame 45 will be described. As illustrated in FIG. 1 and FIG. 2, the ROPS frame 45 is configured by coupling of a left frame 45L, a right frame 45R, and a back frame 45B. The ROPS frame 45 is made of, for example, a metal pipe with a circular cross section. The left frame 45L and the right frame 45R form a pair of support frames.

The left frame 45L and the right frame 45R are coupled to the left and right positions of the front wall part 41F1 of the floor 41F of the driving unit 41, respectively. The left frame 45L and the right frame 45R each have an L-shape that extends upward from the floor 41F side and then bends backward. The back frame 45B extends in the left-right direction, and one end and the other end are coupled to respective back ends of the left frame 45L and the right frame 45R. A bending part and a coupling part of each frame are curved.

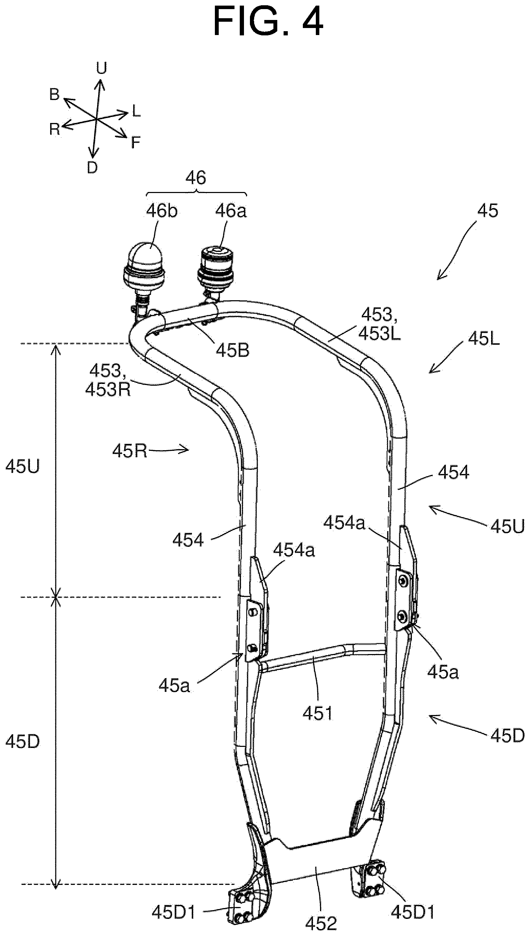

FIG. 4 is an enlarged perspective view of the ROPS frame 45. In FIG. 4, an antenna 47, which will be described later, is omitted for convenience. The left frame 45L and the right frame 45R each have an upper frame 45U and a lower frame 45D. The upper frames 45U are located above the lower frames 45D. Lower ends 45D1 of the lower frames 45D are fastened and fixed to the front wall part 41F1 (see FIG. 2) of the driving unit 41 by bolts or the like. The upper frames 45U and the lower frames 45D are coupled via hinges 45a so as to be relatively rotatable in the front-back direction.

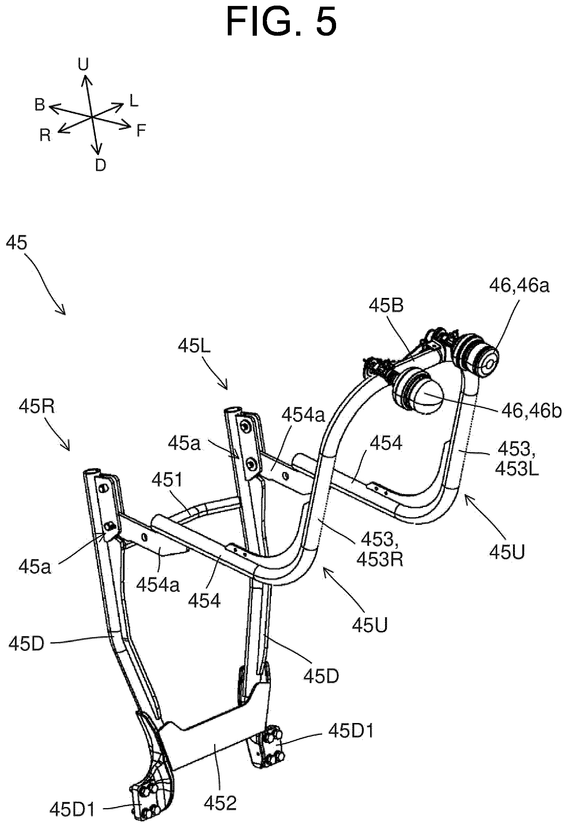

FIG. 5 is a perspective view illustrating the upper frames 45U tilted forward with respect to the lower frames 45D. In FIG. 5, the antenna 47 is also omitted for convenience. For example, when the hydraulic excavator 1 is loaded onto a truck or the like for transportation, the upper frames 45U are rotated forward with respect to the lower frames 45D, with pivots of the hinges 45a as fulcrums. Consequently, the ROPS frame 45 can be folded down to reduce the maximum height of the hydraulic excavator 1 during transportation.

Thus, the ROPS frame 45 as a protective member includes the lower frames 45D supported by the front wall part 41F1 of the driving unit 41, and the upper frames 45U supported on upper parts of the lower frames 45D via the hinges 45a as support parts so as to be able to tilt forward.

A reinforcement frame 451 and a reinforcement plate 452 are fixed to the respective lower frames 45D of the left frames 45L and the right frame 45R. The reinforcement frame 451 and the reinforcement plate 452 are provided for the purpose of the reinforcement of the ROPS frame 45. The reinforcement frame 451 is located above the reinforcement plate 452. The reinforcement frame 451 extends in the left-right direction, and each end in the left-right direction is fixed to the upper part of each of the left and right lower frames 45D by welding or the like. The reinforcement plate 452 is a plate that expands in the up-down direction and in the left-right direction, and each end is the left-right direction is fixed to a lower part of each of the left and right lower frames 45D by welding or the like.

In this embodiment, each lower frame 45D is formed in such a shape that an interval in the left-right direction is constant above the center in the up-down direction, and narrows from the center in the up-down direction toward the lower side. The shape of each lower frame 45D can be set appropriately. For example, each lower frame 45D may be formed in such a shape that the interval in the left-right direction is constant throughout in the up-down direction. Furthermore, each lower frame 45D may be formed in such a shape in which the interval in the left-right direction changes continuously in the up-down direction.

The respective upper frames 45U of the left frame 45L and the right frame 45R have upper protective frames 453. In addition, the upper protective frame 453 of the left frame 45L is also referred to as a left upper protective frame 453L, and the upper protective frame 453 of the right frame 45R is also referred to as a right upper protective frame 453R. The left upper protective frame 453L and the right upper protective frame 453R are located apart in the left-right direction. Each upper protective frame 453 extends in the front-back direction above the driving unit 41. Thus, the ROPS frame 45 as the protective member has upper protective frames 453 extending from the front to the back above the driving unit 41, as upper protective parts.
The upper protective frames 453 include a left upper protective frame 453L (left upper protective part) disposed relatively on the left side, and a right upper protective frame 453R (right upper protective part) disposed relatively on the right side.

A back end of the left upper protective frame 453L is coupled to a left end of the back frame 45B.
A back end of the right upper protective frame 453R is coupled to a right end of the back frame 45B.

Each of the left and right upper frames 45U further includes a coupling frame 454. Each coupling frame 454 extends in the up-down direction. Respective front ends of the upper protective frames 453 are bent (curved) downward to be coupled to upper ends of the coupling frames 454. Respective lower ends of the coupling frames 454 are rotatably coupled to the hinges 45a via couple stays 454a.

### [4. Antenna]

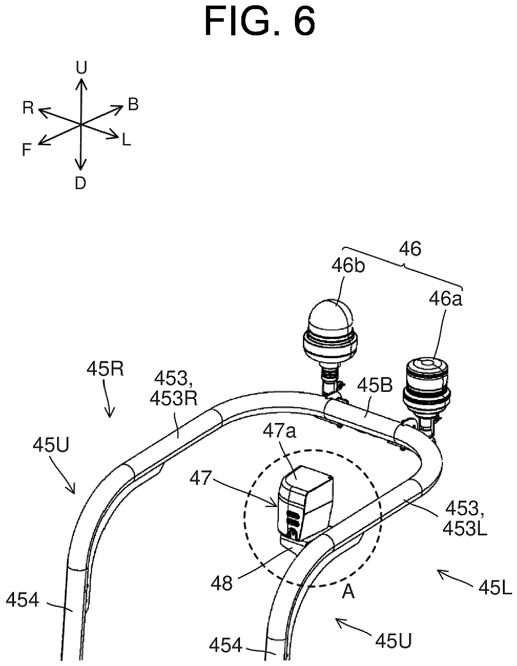

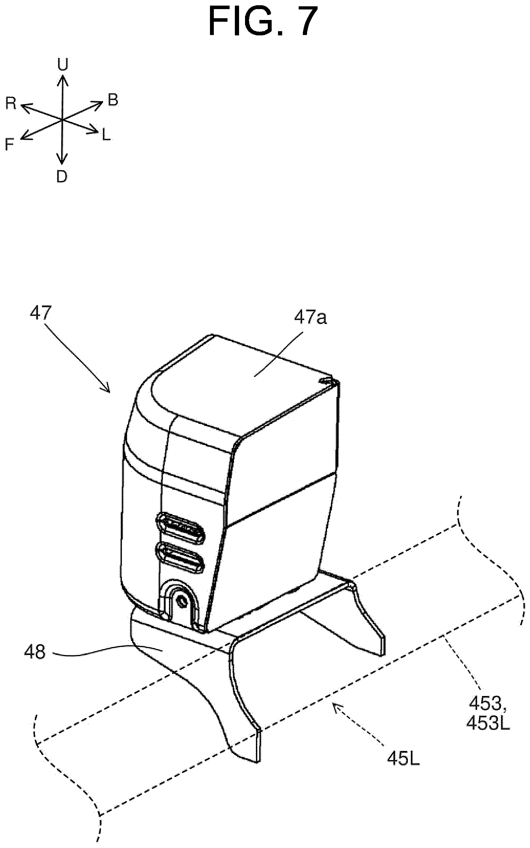

As illustrated in FIG. 1 and FIG. 2, the antenna 47 is mounted on the ROPS frame 45. FIG. 6 is a perspective view illustrating a mounting location of the antenna 47 on the ROPS frame 45. FIG. 7 is an enlarged perspective view of a part A in FIG. 6.

The antenna 47 is a device for transmitting (emitting) or receiving (absorbing) radio waves, and is also referred to as a communication device or a communication unit. The antenna 47 includes at least one of a positioning antenna and a communication antenna. The positioning antenna obtains position information of an own vehicle (hydraulic excavator 1) by receiving radio signals transmitted from positioning satellites. The positioning antenna includes a Global Navigation Satellite System (GNSS) antenna and the like. The communication antenna is provided for wireless communication with an external remote monitoring device. The transmission and reception of radio waves via the antenna 47 is controlled by the system controller 67 (see FIG. 3).

The antenna 47 and the system controller 67 are connected via a cable (not illustrated). The above cable is routed through a metal pipe that makes up the ROPS frame 45. A housing 47a, which is an exterior cover of the antenna 47, is made of resin. Consequently, communication between the antenna 47 and the outside is not impeded by the housing 47a.

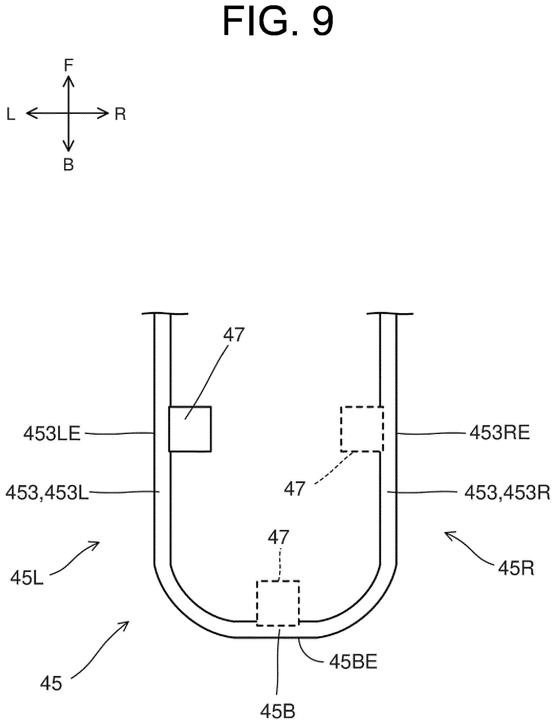

The antenna 47 is mounted on the upper protective frame 453 of the upper frame 45U via a first bracket 48. The antenna 47 is fastened to the first bracket 48 using fastening members such as bolts. The first bracket 48 is fixed, by welding, to the side (outer surface) of the upper frame 45U (the left upper protective frame 453L in FIG. 6 and FIG. 7). The first bracket 48 may be fixed to the upper frame 45U using fastening members such as bolts. Thus, the hydraulic excavator 1 includes the antenna 47 that is mounted on the ROPS frame 45 as the protective member. In FIG. 2, FIG. 6 and FIG. 7, the antenna 47 is mounted on the left frame 45L of the ROPS frame 45, but may be mounted on the right frame 45R or the back frame 45B (see FIG. 9).

The antenna 47 is mounted on the ROPS frame 45 that rises from the front of the driving unit 41, so that there is no need to secure a separate space around the driver's seat 41a to install a communication unit. In other words, even when the hydraulic excavator 1 is small and the space around the driver's seat 41a is narrow, the antenna 47 can be installed. Therefore, even the small hydraulic excavator 1 is able to communicate with the outside using the antenna 47.

In addition, the antenna 47 is mounted on the ROPS frame 45, it becomes possible to locate the antenna 47 at a position away from an operator seated on the driver's seat 41a by a predetermined distance or more. Consequently, the impact of radio waves transmitted and received by the antenna 47 on a human body is reduced. In other words, even when the antenna 47 needs to be at a distance from the operator, it is easy to install the antenna 47 on the hydraulic excavator 1. Furthermore, the antenna 47 is not surrounded by a metal wall such as a bonnet, that is, a metal wall which blocks propagation of radio waves. Therefore, it is easy to establish good communication.

As illustrated in FIG. 1, the driver's seat 41a of the driving unit 41 is located behind the antenna 47. That is, the driving unit 41 includes the driver's seat 41a disposed behind the antenna 47. In this configuration, when an operator sits in the driver's seat 41a, the antenna 47 is located in front of the operator. In this case, the operator can visually recognize the antenna 47 (for example, diagonally upward). Therefore, the operator can easily check whether or not the antenna 47 will come into contact with any obstacles around (e.g., above) while working with the hydraulic excavator 1.

In addition, as illustrated in FIG. 1, the antenna 47 is disposed at a higher position than the operation lever 411 of the driving unit 41. In such placement of the antenna 47, a risk that the antenna 47 hinders the operation of the operation lever 411 by the operator is reduced. In addition, by installing the antenna 47 at a higher position, it is possible to achieve good communication with the outside. Therefore, as in this embodiment, the antenna 47 can be used not only as a communication antenna, but also as a positioning antenna that accurately measures the position information of a machine body.

As described above, the antenna 47 is mounted on the upper frame 45U of the ROPS frame 45 via the first bracket 48. By using the first bracket 48, it is possible to stably support the antenna 47 against the upper frame 45U. In addition, by mounting the antenna 47 on the upper frame 45U, it is easy to dispose the antenna 47 as high as possible and achieve good communication with the outside.

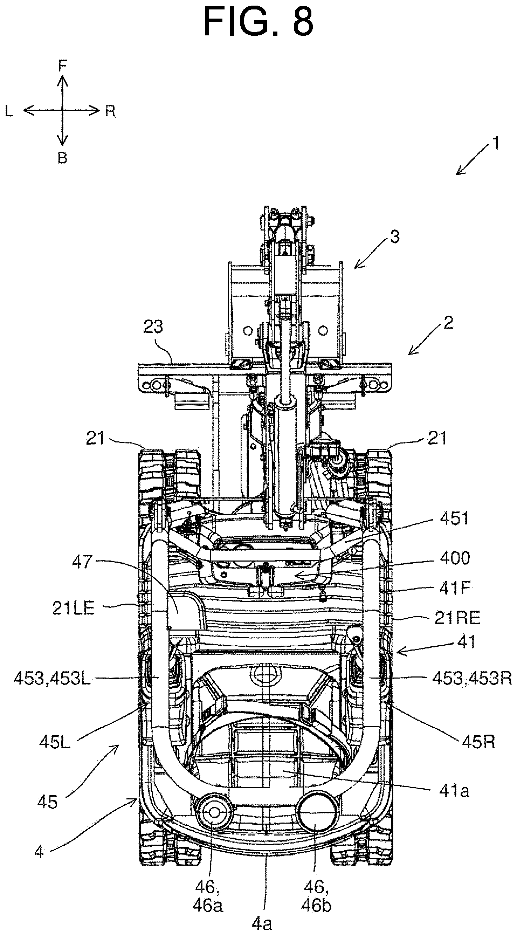

FIG. 8 is a plan view of the hydraulic excavator 1. FIG. 9 is an explanatory diagram illustrating a schematic positional relation between the ROPS frame 45 and the antenna 47 in the plan view of FIG. 8. As illustrated in FIG. 8, the antenna 47 is disposed on the machine body inner side with respect to a machine body outer side end of the hydraulic excavator 1 in plan view. In addition, the "machine body outer side" and the "machine body inner side" may be the outer side (opposite side from the driving unit 41) and the inner side (the driving unit 41 side) of the machine body (hydraulic excavator 1) in the left-right direction when seeing the hydraulic excavator 1 from above, or may be the outer side and the inner side of the machine body in the front-back direction. Specifically, the "machine body outer side" and the "machine body inner side" can be considered as follows.

As illustrated in FIG. 8 and FIG. 9, when the antenna 47 is mounted on the left upper protective frame 453L via the first bracket 48 (see FIG. 6 and FIG. 7), "the machine body inner side with respect to a machine body outer side end of the hydraulic excavator 1" indicates the right side with respect to a left side end 21LE of the left crawler 21. Therefore, in this case, the antenna 47 is disposed on the right side with respect to the left side end 21LE of the left crawler 21 in plan view. In other words, the antenna 47 is disposed on the machine body inner side with respect to the end (e.g., the left side end 21LE) in the machine body width direction (left-right direction) of the lower traveling body 2 which is disposed below the driving unit 41.

On the other hand, as illustrated in FIG. 9, when the antenna 47 is mounted on the right upper protective frame 453R of the ROPS frame 45, the antenna 47 may be disposed on the machine body inner side (left side) with respect to a right side end 21RE (see FIG. 8) of the right crawler 21 in the left-right direction. In addition, when the antenna 47 is mounted on the back frame 45B of the ROPS frame 45, the antenna 47 may be disposed on the machine body inner side (front side) with respect to a back end 4a of the upper turning body 4 in the front-back direction.

Thus, the antenna 47 is disposed on the machine body inner side with respect to the machine body outer side end of the hydraulic excavator 1, so that the antenna 47 does not protrude from the hydraulic excavator 1 in plan view. Therefore, when the hydraulic excavator 1 travels or the upper turning body 4 turns, the risk that the antenna 47 comes into contact with a surrounding obstacle (e.g., a wall) and is damaged is reduced.

In this embodiment, the antenna 47 is disposed on the machine body inner side with respect to a machine body outer side end of the upper protective frame 453 in the left-right direction. Specifically, as illustrated in FIG. 8, when the antenna 47 is mounted on the left upper protective frame 453L via the first bracket 48, the antenna 47 is disposed on the right side with respect to a left end 453LE (see FIG. 9) of the left upper protective frame 453L in plan view. When the antenna 47 is mounted on the right upper protective frame 453R via the first bracket 48, the antenna 47 may be disposed on the left side with respect to a right end 453RE (see FIG. 9) of the right upper protective frame 453R in plan view. In any case, the antenna 47 is disposed between the left end 453LE (machine body outer side end) of the left upper protective frame 453L and the right end 453RE (machine body outer side end) of the right upper protective frame 453R in plan view.

In FIG. 8 and FIG. 9, the antenna 47 is disposed so as to overlap with a portion of the upper protective frame 453 in plan view, but may be disposed so as not to overlap with the upper protective frame 453, that is, on the machine body further inner side with respect to the upper protective frame 453. Such placement can be easily realized, for example, by shifting the mounting position of the antenna 47 with respect to the first bracket 48 to the machine body inner side, or by changing the shape or the size of the first bracket 48 on which the antenna 47 is mounted.

Thus, the antenna 47 is located on the machine body inner side with respect to the machine body outer side end of the upper protective frame 453 in the left-right direction, so that when the hydraulic excavator 1 falls over, the upper protective frame 453 comes into contact with the ground or a surrounding obstacle (such as a wall) before the antenna 47. Therefore, the risk that the antenna 47 is damaged in the event of a fall is reduced. From a viewpoint of ensuring protection of the antenna 47 in the event of a fall, it is desirable that the antenna 47 is disposed between the left end 453LE and the right end 453RE in plan view, as in this embodiment.

From the same viewpoint, when the antenna 47 is mounted on the back frame 45B via the first bracket 48, for example, it is desirable that the antenna 47 is disposed forward (on the machine body inner side) with respect to the back end 45BE (see FIG. 9), which is the machine body outer side end of the back frame 45B, in plan view.

The frame on which the antenna 47 is mounted in the ROPS frame 45 is not limited to the upper protective frames 453 and the back frame 45B described above.

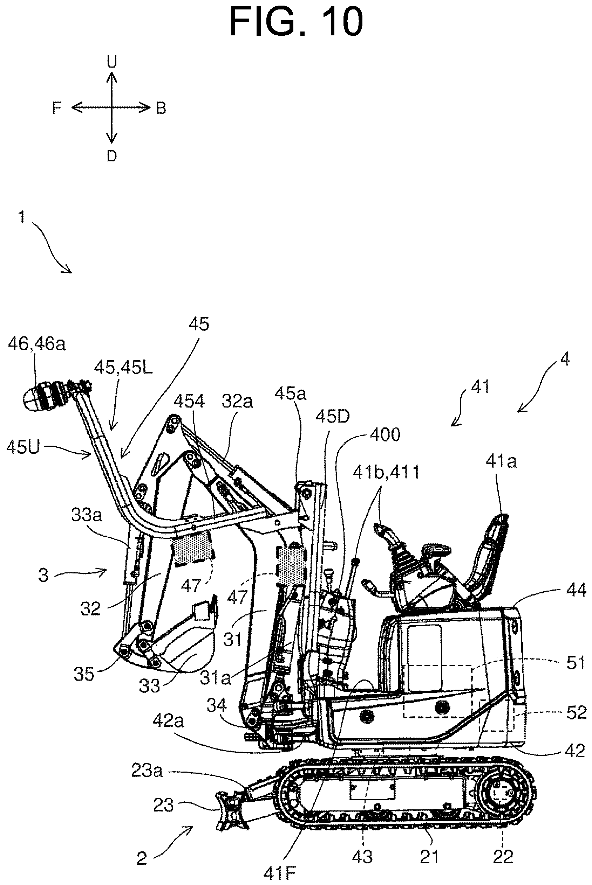

FIG. 10 is a side view illustrating another mounting position of the antenna 47 in the hydraulic excavator 1. The antenna 47 may be mounted on either the left or right coupling frame 454, or on either the left or right lower frame 45D. In addition, when the antenna 47 is mounted on the lower frame 45D, the antenna 47 may be disposed at the upper front of the lower frame 45D.

In addition, when the upper frames 45U rotate forward with respect to the lower frames 45D, the rotation of the upper frames 45U beyond a predetermined angle is restricted by the hinges 45a. Therefore, as illustrated in FIG. 10, even when the antenna 47 is disposed at the upper front of the lower frames 45D, it is possible to prevent the antenna 47 from coming into contact with the upper frames 45U when the upper frames 45U rotate forward.

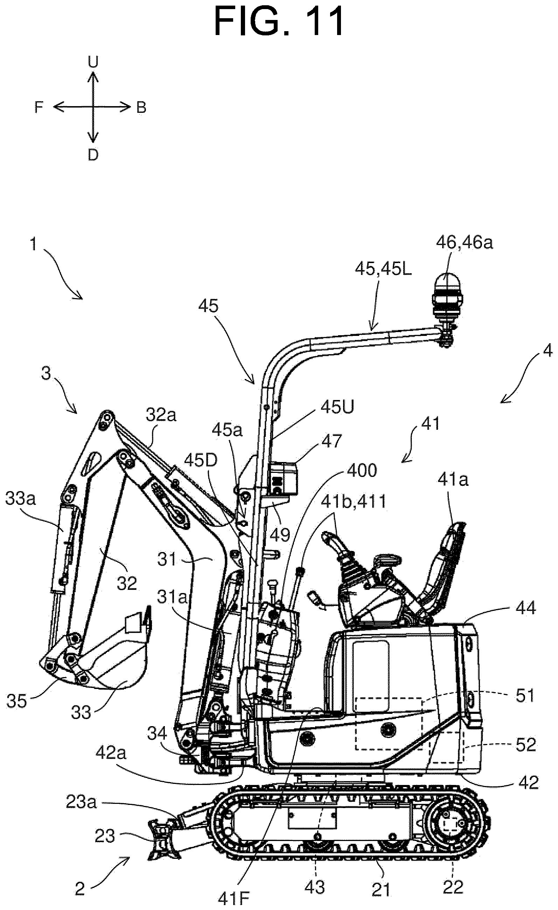

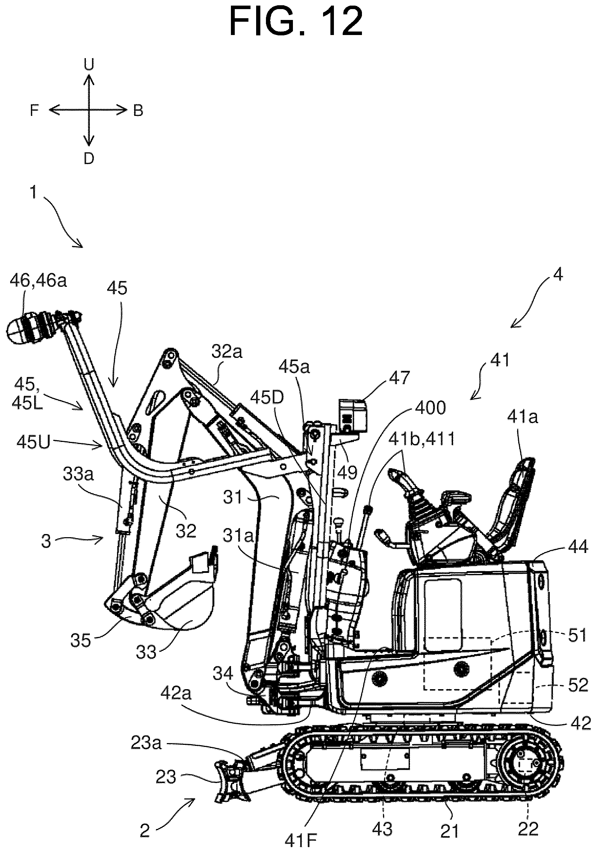

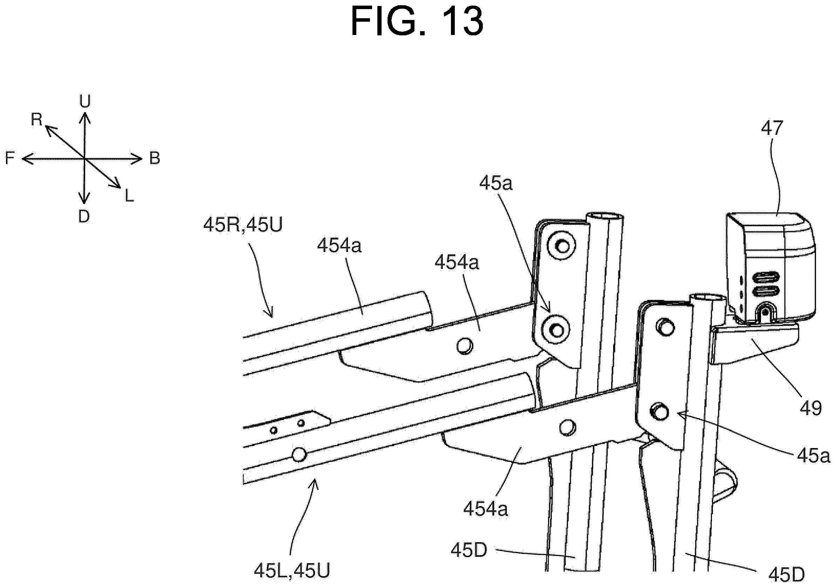

FIG. 11 is a side view illustrating still another mounting position of the antenna 47 in the hydraulic excavator 1. FIG. 12 is a side view illustrating a position of the antenna 47 when the upper frames 45U are folded forward with respect to the lower frames 45D. FIG. 13 is an enlarged perspective view illustrating the mounting position of the antenna 47 in FIG. 12. As illustrated in these figures, the antenna 47 may be mounted on the lower frame 45D via a second bracket 49. In FIG. 13, the antenna 47 is mounted on the lower frame 45D of the left frame 45L, but may be mounted on the lower frame 45D of the right frame 45R.

The antenna 47 is fastened to the second bracket 49 using fastening members such as bolts. The second bracket 49 is fixed to the side (outer surface) of the lower frame 45D by welding. The second bracket 49 may be fixed to the lower frame 45D using fastening members such as bolts.

By using the second bracket 49, the antenna 47 can be stably supported on the lower frame 45D. In addition, in a configuration in which the antenna 47 is mounted on the lower frame 45D, the antenna 47 remains stationary even when the upper frames 45U are tilted forward with respect to the lower frames 45D. Therefore, even when the upper frames 45U are tilted, there is no need to worry about bending the cable (not illustrated) connected to the antenna 47. Therefore, damage caused by bending the cable is avoided.

As illustrated in FIG. 11 to FIG. 13, the antenna 47 is desirably disposed behind the lower frames 45D. In this case, even when the upper frames 45U are tilted forward with respect to the lower frames 45D, there is no risk that the antenna 47 comes into contact with the upper frames 45U, and damage to the antenna 47 is reliably avoided.

As illustrated in FIG. 10, the antenna 47 may be disposed in front of the lower frames 45D. Therefore, when the mounting position of the antenna 47 illustrated in FIG. 10 and FIG. 11 is summarized, it can be said that antenna 47 may be disposed facing the ROPS frame 45 in the front-back direction.

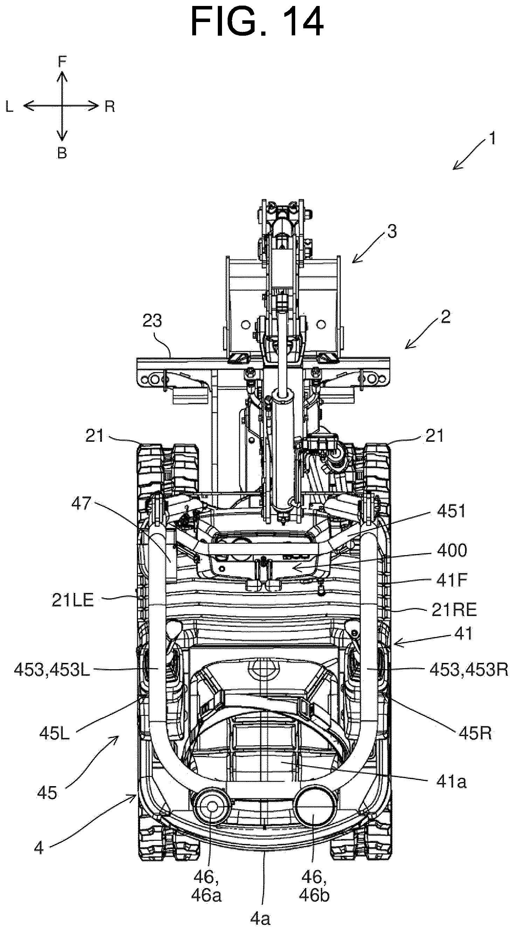

FIG. 14 is a plan view of the hydraulic excavator 1 illustrated in FIG. 11. As illustrated in FIG. 14, even in a configuration in which the antenna 47 is mounted on the lower frame 45D, it is desirable that the antenna 47 is disposed on the machine body inner side with respect to the machine body outer side end of the hydraulic excavator 1 (for example, the left side end 21LE of the left crawler 21) in plan view. Consequently, when the hydraulic excavator 1 travels or the upper turning body 4 turns, the risk that the antenna 47 comes into contact with a surrounding obstacle and is damaged is reduced.

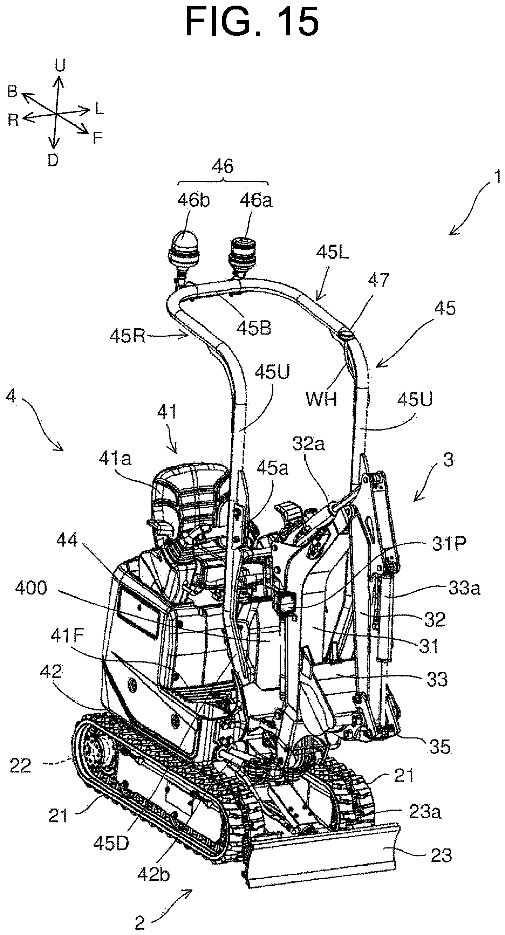

FIG. 15 is a perspective view schematically illustrating another configuration of the hydraulic excavator 1. A hydraulic excavator 1 illustrated in FIG. 15 has the same configuration as the hydraulic excavator 1 in FIG. 1 and the like, except that instead of the first bracket 48 and the second bracket 49, a wire harness WH is used as a support member, and an antenna 47 is mounted (supported) on a ROPS frame 45 by the wire harness WH. The wire harness WH is configured such that a cable connecting the antenna 47 and a system controller 67 (see FIG. 3) are bundled together with a rigid tube. The above cable include an electric wire used for power supply and a wire used for signal communication.

Thus, it is possible to take out the wire harness WH from the inside of a metal pipe that constitutes the ROPS frame 45 to the outside, and support the antenna 47 from below with the wire harness WH. In other words, it is possible to mount the antenna 47 on the ROPS frame 45 without using the first bracket 48 and the second bracket 49.

### [5. Supplement]

In this embodiment, a configuration in which the hydraulic excavator 1 includes the electric motor 61 as a motor is described, but the motor may be an engine.

The hydraulic excavator 1 may be configured to combine hydraulic equipment such as the hydraulic actuator 73 (e.g., a hydraulic motor, a hydraulic cylinder) with an actuator driven by electric power. As the actuator driven by electric power include, for example, an electric traveling motor, an electric cylinder, and an electric turning motor.

In this embodiment, the hydraulic excavator 1, which is a construction machine, is used as an example of a work machine. However, the work machine is not limited to the hydraulic excavator 1, and may be other construction machine such as a wheel loader and a compact track loader. The work machine may also be an agricultural machine such as a combine and a tractor.

### [6. Appendixes]

The work machine described in this embodiment can also be expressed as the following appendixes.

A work machine of Appendix (1) is a work machine provided with a work implement supported in front of a driving unit, and includes:
a protective member that is erected between the driving unit and the work implement, and protects the driving unit; and
an antenna mounted on the protective member.

According to a work machine of Appendix (2), in the work machine mentioned in Appendix (1),
the antenna is disposed on a machine body inner side with respect to a machine body outer side end of the work machine in plan view.

According to a work machine of Appendix (3), in the work machine mentioned in Appendix (1) or Appendix (2),
the driving unit includes a driver's seat disposed behind the antenna.

According to a work machine of Appendix (4), in the work machine mentioned in any of Appendix (1) to Appendix (3),
the driving unit includes an operation lever for operating the work machine, and
the antenna is disposed at a higher position than the operation lever.

According to a work machine of Appendix (5), in the work machine mentioned in any of Appendix (1) to Appendix (4),
the protective member has an upper protective part extending from a front to a back above the driving unit, and
the antenna is disposed on a machine body inner side with respect to a machine body outer side end of the upper protective part in a left-right direction.

According to a work machine of Appendix (6), in the work machine mentioned in Appendix (5),
the upper protective part includes a left upper protective part disposed relatively on a left side, and a right upper protective part disposed relatively on a right side, and
the antenna is disposed between a machine body outer side end of the left upper protective part and a machine body outer side end of the right upper protective part in plan view.

According to a work machine of Appendix (7), in the work machine mentioned in any of Appendix (1) to Appendix (6),
the protective member includes:
a lower frame supported by a front wall part of the driving unit; and
an upper frame supported on an upper part of the lower frame such that the upper frame is able to be tilted forward via a support part, and
the antenna is mounted on the upper frame via a first bracket.

According to a work machine of Appendix (8), in the work machine mentioned in any of Appendix (1) to Appendix (4),
the antenna is disposed facing the protective member in a front-back direction.

According to a work machine of Appendix (9), in the work machine mentioned in any of Appendix (1) to Appendix (4), or Appendix (8)
the protective member includes:
   a lower frame supported by a front wall part of the driving unit; and
   an upper frame supported on an upper part of the lower frame such that the upper frame is able to be tilted forward via a support part, and
the antenna is mounted on the lower frame via a second bracket.

According to a work machine of Appendix (10), in the work machine mentioned in Appendix (9),
the antenna is disposed behind the lower frame.

Although the embodiment of the present invention is described above, the scope of the present invention is not limited thereto, and can be carried out within an extended or modified range without departing from the gist of the present invention.

### INDUSTRIAL APPLICABILITY

The present invention can be used for a work machine such as a construction machine and an agricultural machine.

### REFERENCE SIGNS LIST

1 hydraulic excavator (work machine, machine body)
3 work implement
21LE left side end (machine body outer side end)
21RE right side end (machine body outer side end)
41 driving unit
41F1 front wall part
41a driver's seat
45 ROPS frame (protective member)
45D lower frame
45U upper frame
45a hinge (support part)
47 antenna
48 first bracket
49 second bracket
411 operation lever
453 upper protective frame (upper protective part)
453L left upper protective frame (left upper protective part)
453R right upper protective frame (right upper protective part)
453LE left end (machine body outer side end)
453RE right end (machine body outer side end)

## Claims

1. A work machine provided with a work implement supported in front of a driving unit, the work machine comprising:
a protective member that is erected between the driving unit and the work implement, and protects the driving unit; and
an antenna mounted on the protective member.

2. The work machine according to claim 1, wherein the antenna is disposed on a machine body inner side with respect to a machine body outer side end of the work machine in plan view.

3. The work machine according to claim 1, wherein the driving unit includes a driver's seat disposed behind the antenna.

4. The work machine according to claim 1, wherein the driving unit includes an operation lever for operating the work machine, and
the antenna is disposed at a higher position than the operation lever.

5. The work machine according to claim 1, wherein the protective member has an upper protective part extending from a front to a back above the driving unit, and
the antenna is disposed on a machine body inner side with respect to a machine body outer side end of the upper protective part in a left-right direction.

6. The work machine according to claim 5, wherein the upper protective part includes a left upper protective part disposed relatively on a left side, and a right upper protective part disposed relatively on a right side, and
the antenna is disposed between a machine body outer side end of the left upper protective part and a machine body outer side end of the right upper protective part in plan view.

7. The work machine according to claim 1, wherein the protective member includes:
a lower frame supported by a front wall part of the driving unit; and
an upper frame supported on an upper part of the lower frame such that the upper frame is able to be tilted forward via a support part, and
the antenna is mounted on the upper frame via a first bracket.

8. The work machine according to claim 1, wherein the antenna is disposed facing the protective member in a front-back direction.

9. The work machine according to claim 1, wherein the protective member includes:
a lower frame supported by a front wall part of the driving unit; and
an upper frame supported on an upper part of the lower frame such that the upper frame is able to be tilted forward via a support part, and
the antenna is mounted on the lower frame via a second bracket.

10. The work machine according to claim 9, wherein the antenna is disposed behind the lower frame.
